# EUROPÄISCHE PATENTANMELDUNG

(11) **EP 0 962 757 A2**
(43) Veröffentlichungstag der Anmeldung: **08.12.1999**
(21) Anmeldenummer: 99109823.7
(22) Anmeldetag: 19.05.1999
(51) Int. Cl.: G01M 17/007, G01M 17/02

(54) **Flachbahneinheit für Kraftfahrzeug- und/oder Reifen-Prüfstände**

(30) Priorität: 30.05.1998 DE 19824443
(71) Anmelder: ADAM OPEL AG, 65423 Rüsselsheim (DE)
(72) Erfinder: Post, Helmut, Dipl.-Ing. (FH), 65428 Rüsselsheim (DE); Bender, Robert, Dipl.-Ing., 64560 Riedstadt (DE)
(74) Vertreter: Kümpfel, Heinz, Dipl.-Ing.

(57) **Zusammenfassung**

Die Erfindung bezieht sich auf eine sehr kompakte Flachbahneinheit für Kraftfahrzeug- und/oder Reifen-Prüfstände mit einer nach Art eines Vielrippen-Keilriemens ausgebildeten Flachbahn 1, welche um zwei mit geringem Abstand zueinander angeordnete Umlenkwalzen (2, 3) geschlungen ist und einen Prüftrum (4) aufweist, das von nur einer etwa vertikal beweglich gelagerten Stützwalze (6) unterhalb eines aufgesetzten Rades (5) abgestützt wird.

## Beschreibung

Die Erfindung bezieht sich auf eine Flachbahneinheit mit den im Oberbegriff des Patentanspruchs 1 angegebenen Merkmalen, wie sie aus der DE 38 30 049 C1 bekannt ist.

Fahrzeugräder, die entweder an einem Fahrzeug oder an speziellen Radlagereinheiten montiert sind, können auf diese Flachbahneinheiten aufgesetzt werden und dort abrollen, ohne daß das Fahrzeug oder die Radlagereinheit bewegt werden. Das jeweils aufgesetzte Rad kann angetrieben oder abgebremst werden und von der Fahrbahn ausgehende Erschütterungen sind simulierbar. Bei Nutzung einer nach Art eines Vielrippen-Keilriemens gestalteten Flachbahn ist gewährleistet, daß sich die Flachbahn nicht auf vorhandenen Umlenkwalzen verschieben kann und es sind auch in begrenztem Maße Seitenkräfte zwischen Rad und Flachbahn übertragbar.

Zur Erzeugung von Vertikalschwingungen können die bekannten Flachbahneinheiten insgesamt auf- und niederbewegt werden. Wegen der erheblichen zu bewegenden Massen lassen sich so aber nur niederfrequente Schwingungen erzeugen.

Aus der DE 38 30 048 C1, DE 38 30 049 C1, DE 38 30 050 C1, DE 31 05 163 C2, DE 39 14 309 C1 und DE 40 15 049 A1 sind spezielle Stützeinheiten bekannt, die unterhalb eines Prüftrums der Flachbahn angeordnet sind. Sie dienen dazu, die Flachbahn bei Belastung durch ein Rad abzustützen. Bei den Lösungen nach DE 38 30 048 C1 und DE 38 30 050 C1 können die Stützeinheiten separat bewegt werden, womit das aufliegende Prüftrum der Flachbahn auch hochfrequent anregbar ist.

Insgesamt sind jedoch alle bekannten Flachbahneinheiten zu schwer, zu groß, in der Konstruktion zu aufwendig und damit zu teuer, wobei wegen der erheblichen zu bewegenden Massen auch die funktionellen Möglichkeiten eingegrenzt sind.

Es ist Aufgabe der Erfindung dem abzuhelfen und eine baulich kleine, leichte, kostengünstige Flachbahneinheit zu schaffen, mittels derer realitätsnahe Fahrzeugrad-Belastungen simulierbar sind.

Zur Lösung dieser Aufgabe zeichnet sich die erfindungsgemäße Flachbahneinheit durch die im Patentanspruch 1 angegebenen Merkmale aus. Weitere Einzelheiten der Erfindung ergeben sich aus den Patentansprüchen 2 bis 4.

Ein die Flachbahn bildendes Band mit Keilrillen-Profil wird über zwei Umlenkwalzen geführt, die relativ dicht beieinander in einem Rahmen gelagert sind. Das Prüftrum der Flachbahn wird zusätzlich von einer Stützeinheit abgestützt, die aus nur einer Stützwalze besteht. Aus nur diesen drei Hauptbauelementen kann eine sehr kompakte und leichte Flachbahneinheit gebildet werden, die alle Anforderungen erfüllt, dabei aber sehr kostengünstig herstellbar ist. Durch den vergleichsweise geringen Abstand der Umlenkwalzen voneinander und die das Prüftrum stützende Stützwalze kann ein Latsch eines auf die Flachbahn aufgesetzten Reifens realitätsnah nachgebildet werden. Niederfrequente Schwingungen (zur Rad- bzw. Fahrwerksbelastung) sind durch Bewegungen der gesamten Flachbahneinheit zu erzeugen. Hochfrequente Fahrbahnanregungen werden hingegen simuliert, indem nur die einzelne Stützwalze etwa senkrecht zum Prüftrum der Flachbahn bewegt wird, was hier mit äußerst geringen Massenverschiebungen verbunden ist. Eine Spannvorrichtung für die Flachbahn wird realisiert, indem zumindest eine der Umlenkwalzen, vorteilhaft jedoch beide Umlenkwalzen im Rahmen verschiebbar angeordnet sind.

Antriebe zur Verschiebung der Stützwalze und der Umlenkwalzen im Rahmen sowie des gesamten Rahmens sollten vorteilhaft servohydraulisch realisiert und von einer programmierbaren Steuer-/Regelvorrichtung angesteuert werden. So kann auch eine koordinierte Ansteuerung von Antrieben der Stützwalze und der Umlenkwalzen erfolgen, womit zu gewährleisten ist, daß die Flachbahnspannung annähernd konstant bleibt, auch wenn die Flachbahn im Prüftrum eine Auslenkung erfährt.

Einzelheiten der Erfindung ergeben sich aus der folgenden Beschreibung eines Ausführungsbeispiels. Die zugehörige Figur zeigt schematisch eine Flachbahneinheit in einer Seitenansicht.

Ein Flachbahn-Band 1 aus faserverstärktem gummielastischen Werkstoff ist endlos ausgebildet und um zwei Umlenkwalzen 2, 3 geführt. Eine Innenseite der Flachbahn 1 ist mit einem Vielrippen-Profil versehen, wie es von Keilriemen her bekannt ist. Somit ist die Flachbahn 1 sehr kostengünstig zu beziehen.

Auf einem Prüftrum 4 der Flachbahn 1 ist ein Fahrzeugrad 5 aufsetzbar, wobei dieses entweder an einem Fahrzeug oder an einem speziellen Prüfrahmen gelagert ist.

Unter dem Prüftrum 4, etwa mittig zwischen den Umlenkwalzen 2, 3 ist eine Stützwalze 6 angeordnet. Direkt über dieser Stützwalze 6 ist das Rad 5 auf dem Prüftrum 4 anzuordnen.

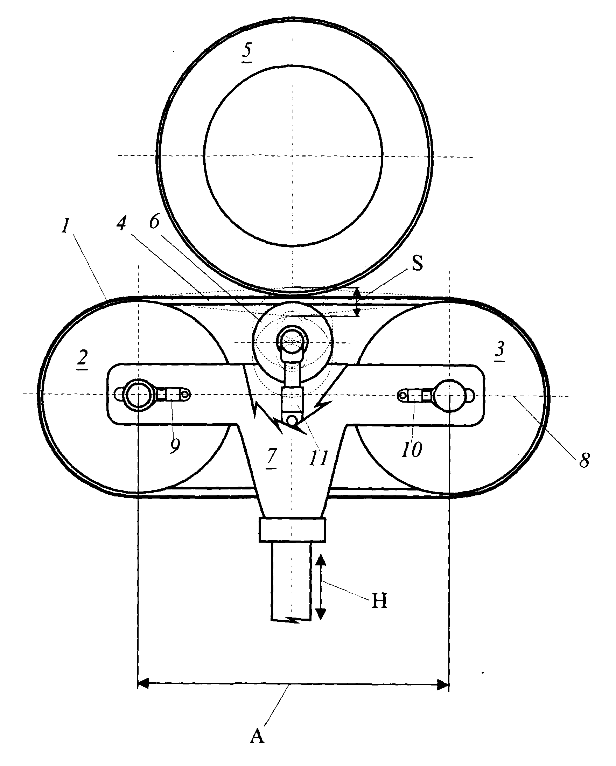

Die Umlenkwalzen 2, 3 und die Stützwalze 6 sind jeweils begrenzt translatorisch verschiebbar in einem Rahmen 7 der Flachbahneinheit gelagert. Dabei ist die Umlenkwalze 2 zusätzlich rotatorisch antreib- bzw. abbremsbar. Ein dafür erforderlicher Antrieb ist in der Figur nicht gezeigt. Die translatorische Bewegung der Umlenkwalzen 2, 3 ist entlang einer Geraden 8 möglich, welche parallel zum Prüftrum 4 liegt. Damit ist es möglich, die Flachbahnspannung zu verstellen. Durch gleichzeitiges verschieben beider Umlenkwalzen 2, 3 mittels zugehöriger servohydraulischer Antriebe 9, 10 wird erreicht, daß sich die Mittelposition des Prüftrums 4 nicht verlagert.

Die Stützwalze 6 ist mittels eines servohydraulischen Antriebes 11 etwa senkrecht zum Prüftrum 4 verschiebbar am Rahmen 7 gelagert. Aufgrund hier sehr geringer zu bewegender Massen ist es möglich, hochfrequente Schwingungen (simulierte Fahrbahnanregungen) von der Stützwalze 6 auf die Flachbahn 1 und das Rad 5 zu übertragen. Dabei wird die Flachbahn 1 nach oben oder (durch die Radlast) nach unten ausgelenkt. Ohne eine übermäßige Flachbahn-Knickung bzw. -Dehnung zu verursachen, kann eine Auslenkung der Flachbahn 1 nach oben und unten um etwa das 0,05fache des Achsabstandes **A** der Umlenkwalzen 2, 3 erfolgen, so daß der Gesamthub **S** des Antriebes 11 der Stützwalze 6 etwa 10 % des Achsabstandes **A** betragen sollte.

Von Vorteil ist, wenn die Antriebe 9, 10, 11 von einer programmierten Steuer-/Regelvorrichtung angesteuert werden. So ist erreichbar, daß die Flachbahnspannung auch bei Auslenkung der Flachbahn 1 etwa konstant bleibt. Zusätzlich kann die Flachbahnspannung den aktuellen Betriebsbedinungen entsprechend (Bandgeschwindigkeit und -belastung) variiert werden, um ein Aufschwingen der Flachbahn zu vermeiden und um die Latschausbildung zu optimieren.

Letztlich ist der gesamte Rahmen 7 der Flachbahneinheit vertikal um den Weg **H** beweglich an einem Fundament abzustützen. Ein zugehöriger Antrieb zur Erzeugung niederfrequenter Schwingungen ist in an sich bekannter Weise ausgeführt und hier zeichnerisch nicht dargestellt. Es kann zusätzlich ein Gelenk vorgesehen sein, mit Hilfe dessen die Neigung der Flachbahneinheit einstellbar ist.

Die so gestaltete Flachbahneinheit ist extrem kompakt und leicht und damit kostengünstig herstellbar. Es ist möglich, auf Standardkomponenten zurückzugreifen. Die Flachbahneinheit ist damit bei der Fahrzeugentwicklung und -erprobung sowie am Bandende Test und auch bei der Reifen- und Radaufhängungsprüfung in großer Stückzahl einsetzbar. Durch programmierte Prüfabläufe sind realitätsnahe Tests durchführbar.

## Patentansprüche

1. Flachbahneinheit für Kraftfahrzeug- und/oder Reifen-Prüfstände mit
- einem über zwei Umlenkwalzen (2, 3) geführten, fahrbahnsimulierenden Band (1) zum Aufsetzen eines Fahrzeugrades (5), wobei das Band (1) aus einem verstärkten gummielastischen Werkstoff besteht und innen nach Art eines Vielrippen-Keilriemens ausgebildet ist,
- einem vertikal beweglichen Rahmen (7), in dem die Umlenkwalzen (2, 3) gelagert sind, und mit
- einer Stützeinheit zum Abstützen eines Bereiches eines Prüftrums (4) des Bandes (1), auf dem das Fahrzeugrad (5) aufgesetzt ist,
**dadurch gekennzeichnet,** daß die Umlenkwalzen (2, 3) mit geringem Abstand (**A**) zueinander im Rahmen (7) gelagert sind und nur eine Stützwalze (6) mit Keilrippen-Profil als Stützeinheit vorgesehen ist, wobei die Stützwalze (6) translatorisch beweglich im Rahmen (7) abgestützt und durch eine Antriebsvorrichtung (11) gesteuert verschiebbar ist.

2. Flachbahneinheit nach Anspruch 1, **dadurch gekennzeichnet,** daß die Stützwalze (6) etwa mittig unterhalb des Prüftrums (4) angeordnet und etwa senkrecht zum Prüftrum (4) beweglich ist, wobei ausgehend von einem gestreckten Prüftrum (4) eine Bewegung der Stützwalze (6) um maximal etwa das 0,05fache des Achsabstandes (**A**) der Umlenkwalzen (2, 3) nach oben und unten möglich ist.

3. Flachbahneinheit nach Anspruch 1 oder 2, **gekennzeichnet durch** eine Flachbahn-Spannvorrichtung, welche aus Mitteln zum gesteuerten translatorischen Verschieben der Umlenkwalzen (2, 3) im Rahmen (7) besteht, wobei die Steuerung dieser Mittel in Abhängigkeit von der gewünschten Flachbahnspannung und/oder abhängig von Auslenkungen der Flachbahn (1) durch die Stützwalze (6) erfolgt.

4. Flachbahneinheit nach den Ansprüchen 1 bis 3, **dadurch gekennzeichnet,** daß die Bewegungen der Stützwalze (6) und der Umlenkwalzen (2, 3) abhängig von Ausgangssignalen einer programmierten Steuer-/Regeleinheit servohydraulisch erzeugt werden.
